## Europäisches Patentamt

## European Patent Office

## Office européen des brevets

(19)

(11) Veröffentlichungsnummer: **0 206 214**
**B1**

(12) **EUROPÄISCHE PATENTSCHRIFT**

(45) Veröffentlichungstag der Patentschrift:
**15.11.89**

(21) Anmeldenummer: **86108219.6**

(22) Anmeldetag: **16.06.86**

(51) Int. Cl.⁴: **G 06 F 15/40,** G 06 K 9/46,
G 06 F 15/62

(54) **Verfahren zur einheitlichen symbolischen Beschreibung von Dokumentenmustern in Form von Datenstrukturen in einem Automaten.**

(30) Priorität: **18.06.85 DE 3521719**

(43) Veröffentlichungstag der Anmeldung:
**30.12.86 Patentblatt 86/52**

(45) Bekanntmachung des Hinweises auf die Patenterteilung:
**15.11.89 Patentblatt 89/46**

(84) Benannte Vertragsstaaten:
**AT DE FR GB IT**

(56) Entgegenhaltungen:
**EP-A-0 059 239**
**EP-A-0 090 395**
**EP-A-0 107 789**

**PROCEEDINGS PRIP '78, IEEE COMPUTER SOCIETY CONFERENCE ON PATTERN RECOGNITION AND IMAGE PROCESSING, 31. Mai - 2. Juni 1978, Chigago, Illinois, Seiten 230-237, IEEE, New York, US; A.V. KULKARNI: "Sequential shape feature extraction from line drawings"**

(73) Patentinhaber: **Siemens Aktiengesellschaft, Wittelsbacherplatz 2, D-8000 München 2 (DE)**

(72) Erfinder: **Scherl, Wolfgang, Dipl.- Ing., Kafkastrasse 54, D-8000 München 83 (DE)**

**Beschreibung**

Die vorliegende Erfindung bezieht sich auf ein Verfahren zur einheitlichen symbolischen Beschreibung von Dokumentmustern in Form von Datenstrukturen in einem Automaten, wobei sich die Dokumentmuster aus den Komponenten "Text" "Grafik" und/oder "Bild" zusammensetzen können, zum Zwecke der Zerlegung des Dokumentmusters in diese Komponenten und zur Weiterverarbeitung dieser Komponenten in auswertenden Modulen für spezielle Anwendungsfalle, wobei aus den digitalisierten Ausgangssignalen einer optischen Abtastvorrichtung zeilenweise Deskriptoren extrahiert werden, welche Stutzstellen entlang Rändern in einem betreffenden Dokumentmuster darstellen.

Aus der DE-OS-3 236 336 (EP-A-0 107 789) ist bereits ein Verfahren zur Darstellung von Druckvorlagen in Form von Großen- und Drehlagen unabhangigen Bogenstrukturen zum Zwecke einer Dokumentenanalyse, insbesondere zur Shriftzeichenerkennung, bekannt. Dabei wird das abzutastende Dokument unter mehreren Projektionsrichtungen abgetastet. Aus den Abtestergebnissen werden sog. Deskriptoren für unterschiedliche Grundmustertypen abgeleitet, die dann einem jeweils bereits abgetasteten Rand eines Symbols in der Vorlage zugeordnet werden. Die so entstehenden Bogenstrukturen werden nach ihrer Fertigstellung in einen weiterverarbeiteten Prozeß eingeleitet.

In anderen bekannten Verfahren werden interne Filter- und Projektionsverfahren in Kombination mit Grauwert- oder Lauflängenstatistiken gelöst.

Die bekannten Verfahren ergeben jeweils Datenstrukturen, die nicht unmittelbar zur Weiterverarbeitung zum Zwecke einer Dokumentanalyse zu benutzen sind.

Der vorliegenden Erfindung liegt die Aufgabe zugrunde, ein Verfahren der eingangs genannten Art zu schaffen, bei dem sich die intern verwendeten Datenstrukturen direkt für eine weitere Verwendung in Texterkennungs- oder Grafikanalysegeräten ohne Rückgriff auf die ursprüngliche Bildinformation verwenden lassen.

Zur Lösung dieser Aufgabe wird ein Verfahren der eingangs genannten Art und gemäß dem Oberbegriff des Patentanspruchs 1 vorgeschlagen, das durch die in dem kennzeichnenden Teil des Patentanspruchs 1 angegebenen Merkmale charakterisiert ist.

Das erfindungsgemäße Verfahren wandelt die Muster eines Dokuments in rechnerintern gespeicherte Datenstrukturen um. Als Grundbausteine dieser Datenstrukturen kommen ausgewählte Punkte von Musterrändern, nämlich sog. Deskriptoren, zum Einsatz. Durch geeignete Zeiger werden diese Deskriptoren zu höheren Einheiten, wie Ränder, Objekte und Worte zusammengefaßt. Die hierzu verwendeten Zeiger geben wichtige Beziehungen und Bedeutungen zwischen den einzelnen Dokumentmustern in Form von Daten wieder. Der Dokumentinhalt wird somit durch Datenketten repräsentiert. Die zur Klassifikation der Text-, Grafik- und Bildanteile notwendigen Merkmale werden vorteilhafterweise ohne Rückgriff auf die ursprüngliche Bildinformation direkt aus den Datenketten errechnet. Die zur Segmentierung nötigen Ortskoordinaten sind als Attribute in die Ketten eingetragen.

Vorteilhafte Weiterbildungen der vorliegenden Erfindung sind durch die in den Unteransprüchen angegebenen Merkmale gekennzeichnet.

Im folgenden wird die vorliegende Erfindung anhand mehrerer, Ausführungsbeispiele für die vorliegende Erfindung betreffender Figuren im einzelnen erläutert.

Fig. 1 zeigt eine schematische Gesamtübersicht über ein System zur Durchführung des erfindungsgemäßen Verfahrens.

Fig. 2 zeigt schematisch einen Modus für einen Direktzugriff auf sog. Randrepräsentanten in einem Datenspeicher SP, wie er bereits in Fig. 1 dargestellt ist.

Fig. 3 zeigt schematisch das Prinzip des Zuordnens von sog. Innenrändern zu einem sog. Außenrand.

Fig. 4 zeigt schematisch den Aufbau von Objektbeschreibungen in einer sog. Objektbildungskette OBK.

Fig. 5 zeigt schematisch Zusammenhänge betreffend ein Dokumentmuster in einer sog. Wortbildungskette WBK.

Fig. 6 zeigt eine schematische Darstellung von sog. Extremdeskriptoren, Diagonalen und Winkeln zwischen diesen Diagonalen zur Berechnung eines Maßes ME.

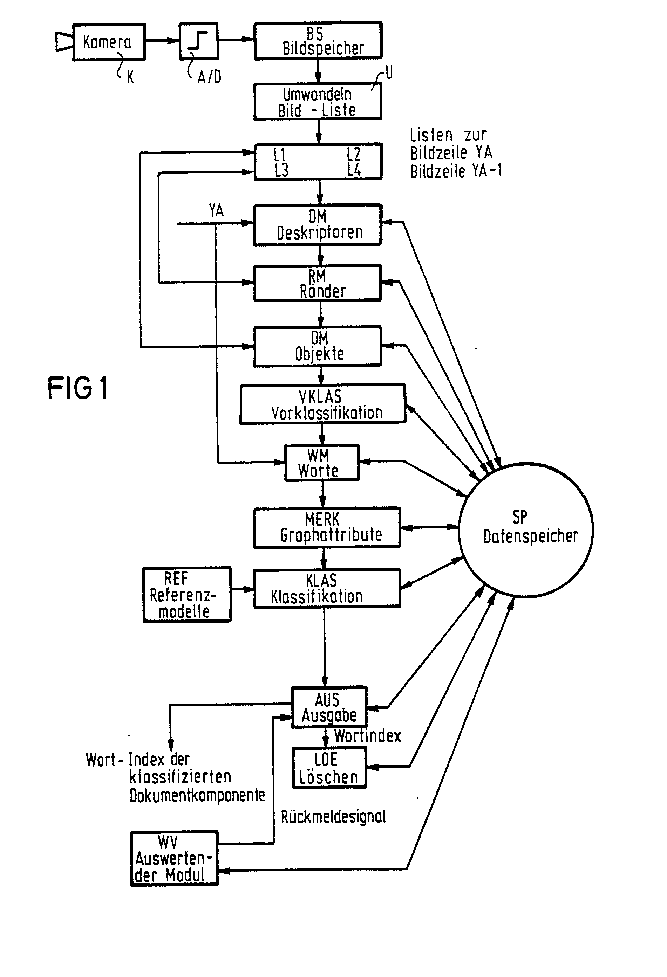

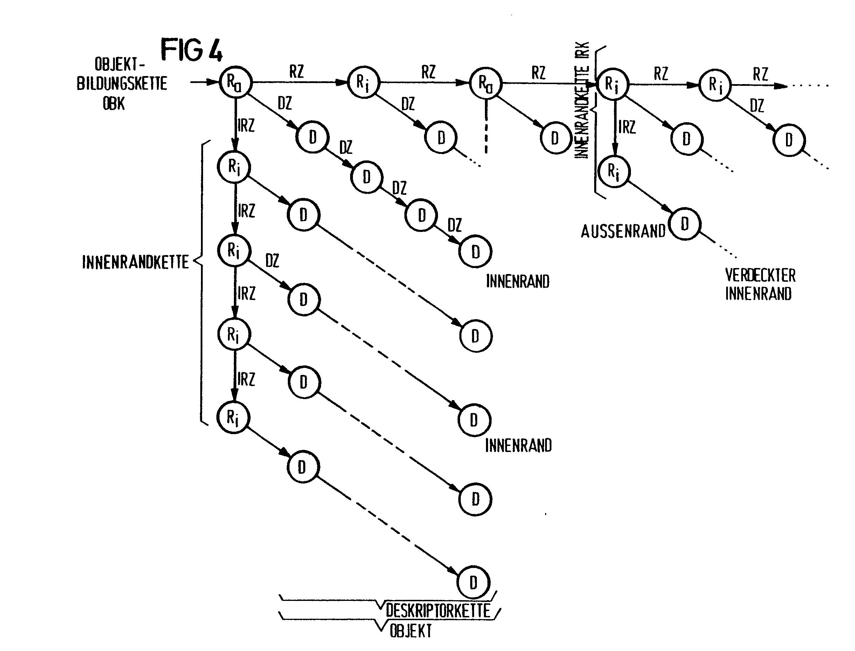

Wie bereits erläutert, zeigt Fig. 1 eine schematische Gegesamtübersicht über ein System zur Durchführung des Verfahrens gemäß der vorliegenden Erfindung. Das zu analysierende Dokument wird mittels einer Kamera K in an sich bekannter Weise abgetastet, deren Ausgangssignale mittels eines Analog/Digitalwandlers A/D in ebenfalls bekannter Weise digitalisiert werden. Die digitalisierten Kamera-Ausgangssignale werden einem Bildspeicher BS zugeführt und zunächst in diesem zwischengespeichert. Ein Vorverarbeitungsmodul U wandelt die digitalen Bilddaten, die er aus dem Bildspeicher BS abruft, in eine verarbeitungsgerechte Form um und trägt sie in verarbeitungsgerechte Listen für die verschiedenen Bildzeilen eines Dokumentabschnitts ein, nämlich Listen L1, L2, L3 und L4. Die Listeninhalte werden einem ersten Modul DM zugeführt, der aus diesen Daten Deskriptoren D errechnet. Die Daten, die die Deskriptoren betreffen, werden in einem jeweils freien Speicherplatz eines Datenspeichers SP abgelegt, woraufhin von dem Datenspeicher SP eine Rückmeldung mit einer Information über den benutzten Speicherplatz erfolgt. Ein zweiter Modul RM wird durch Übergabe der rückgesendeten Adreßinformation aktiviert, und er übernimmt diese Adreßinformation zusammen mit Listenindizes aus den Listen L1...L4, wobei der zweite Modul RM diese Adreßinformation dazu benutzt, den in dem Datenspeicher SP abgelegten Deskriptor in eine bereits vorhandene Deskriptorkette mit einem Randrepräsentanten R einzubauen bzw. eine neue Deskriptorkette mit Bildung eines dafür notwendigen neuen Randrepräsentanten R zu beginnen, wobei es sich bei den Deskriptorketten jeweils um eine Verkettung einzelner Deskriptoren D mit Hilfe von Zeigern DZ handelt und ein neuer Deskriptor D, der in einem beliebigen Speicherplatz in dem Datenspeicher SP abgelegt ist, durch Zeiger mit der betreffenden bereits bestehenden Kette oder bereits bestehenden Ketten verbunden wird, vgl. Fig. 4. Mit Hilfe der übergebenen Listenindizes wird die Position des oder der zugehörigen Randrepräsentanten direkt den Listen L1...L4 entnommen, wobei bei einer Änderung des Repräsentanten der Deskriptorkette diese Information durch den zweiten Modul RM wieder in die Listen L1...L4 ruckeingetragen wird. Wenn durch eine Deskriptorkette ein vollständig geschlossener Rand gebildet worden ist, übergibt der zweite Modul RM den Index dieses Randes zur weiteren Verarbeitung einem dritten Modul DM für die Behandlung von Objekten. Der zweite Modul RM für die Behandlung von Rändern prüft zusammen mit der Information in dem Datenspeicher SP aufgrund des bestimmten Randindex, ob es sich bei dem Rand um einen sog. Innenrand oder einen sog. Außenrand handelt. Im Falle eines Innenrandes werden die Listenindizes der L1...L4 dazu verwendet, aus diesen Listen den Speicherindex des Repräsentanten des umschließenden Außenrandes eines Objekts abzurufen. Mit Hilfe des Index wird der Repräsentant des Innenrandes durch einen Zeiger IRZ an eine Innenrandkette IRK an den Repräsentanten des Außenrandes in dem Datenspeicher SP "angehängt". Im Falle eines Außenrandes wird dessen Repräsentant als Repräsentant eines Objekts genutzt, wobei das Objekt den Außenrand sowie alle davon umschlossenen Innenränder umfaßt. In diesem Fall wird der Index des Repräsentanten des fertigen Objekts an einen vierten Modul VKLAS für eine Vorklassifikation weitergegeben. Der vierte Modul VKLAS trifft an anhand der Gesamtanzahl der als zu einem Objekt zugehörig abgespeicherten Ränder eine Vorentscheidung darüber, ob es sich bei dem Objekt mit Sicherheit um eine Bild- oder Grafikkomponente handelt oder nicht. Im Falle einer Bild- oder Grafikkomponente wird in dem Datenspeicher SP der Repräsentant dieses Objekts durch eine eigene Markierung als Bild- oder Grafikkomponente gekennzeichnet. Der Index des Repräsentanten dieses markierten oder nichtmarkierten Objekts wird im weiteren Verlaufe an einen fünften Modul WM zur Behandlung von Worten übergeben. In diesem fünften Modul WM werden aus dem Außenrand des Objekts Anlagerungskriterien errechnet. Mit Hilfe dieser Anlagerungskriterien wird das Objekt in an sich bekannter Weise mit bereits in dem Datenspeicher SP gespeicherten Wortrepräsentanten verglichen. Es erzeugt selbst einen neuen Wortrepräsentanten in dem Datenspeicher SP oder wird mit anderen Objekten, die einem bereits vorhandenen Wortrepräsentanten in dessen Buchstabenkette BK untergeordnet sind, zu einem erweiterten Wort zusammengelagert und dabei in die Buchstabenkette dieser betreffenden Wortinformation eingefügt. Objektrepräsentanten, welche durch den 5. Modul VKLAS markiert wurden, bilden jeweils einen eigenen Repräsentanten, der sich nicht mit anderen Worten oder Objekten zusammenlagert. Durch Vergleich mit dem Index der betreffenden Abtastzeile YA wird in an sich bekannter Weise für die einzelnen Wortrepräsentanten entschieden, das Wort in dem Datenspeicher SP vollständig ist und daher weiterbearbeitet werden kann oder nicht. Im Falle der Vollständigkeit wird der Index des betreffenden Wortrepräsentanten an einen sechsten Modul MERK zur Bildung sog. Grafattribute weitergegeben. In dem sechsten Modul MERK wird aus der Gesamtanzahl der den Wortrepräsentanten untergeordneten Objekt-Randrepräsentanten und -Deskriptoren sowie deren verbindenden Zeigern DZ ein Attributvektor V kennzeichnender Attribute errechnet. Dieser Vektor wird dem Wortrepräsentanten beigefügt. Anschließend daran ist vorgesehen, daß unter Weitergabe des Index des Wortrepräsentanten an einen folgenden siebenten Modul KLAS dieser ebenfalls nach einem an sich bekannten Klassifikationsverfahren in einem achten Modul REF gespeicherte Referenzmodelle mit dem Attributvektor V des Wortrepräsentanten vergleicht und aus dem Vergleich eine Entscheidung darüber fällt, ob der Wortrepräsentant an einen Repräsentanten der Kategorie "Text", "Bild" oder "Grafik" darstellt. In einem Ausgabemodul AUS, dem der Index des fertigen Wortrepräsentanten übermittelt wird, wird die gesamte in dem Datenspeicher SP gespeicherte Information über diesen Wortrepräsentanten einschließlich der Information über seine ihm untergeordneten Repräsentanten einem weitergehenden, auswertenden Verfahren in auswertenden Moduln WV zur Verfügung gestellt. Einem der auswertenden Moduln WF wird nur der Index des Wortrepräsentanten übermittelt, und dieser Modul bearbeitet durch eigenen Zugriff auf den Datenspeicher SP die darin unter dem Index des betreffenden Wortrepräsentanten gespeicherte Information. In diesem Fall wird die Übergabe an einen darauffolgenden, abschließenden Modul LOE solange verzögert, bis der auswertende Modul WV die Information verarbeitet und dies an den Ausgabe-Modul AUS rückgemeldet hat. Nach Übermittlung des Index des Wortrepräsentanten wird in dem abschließenden Modul LOE der fertig bearbeitete Repräsentant des Wortes mit allen Objekt-und Randrepräsentanten sowie den betreffenden Deskriptoren in dem Datenspeicher SP gelöscht.

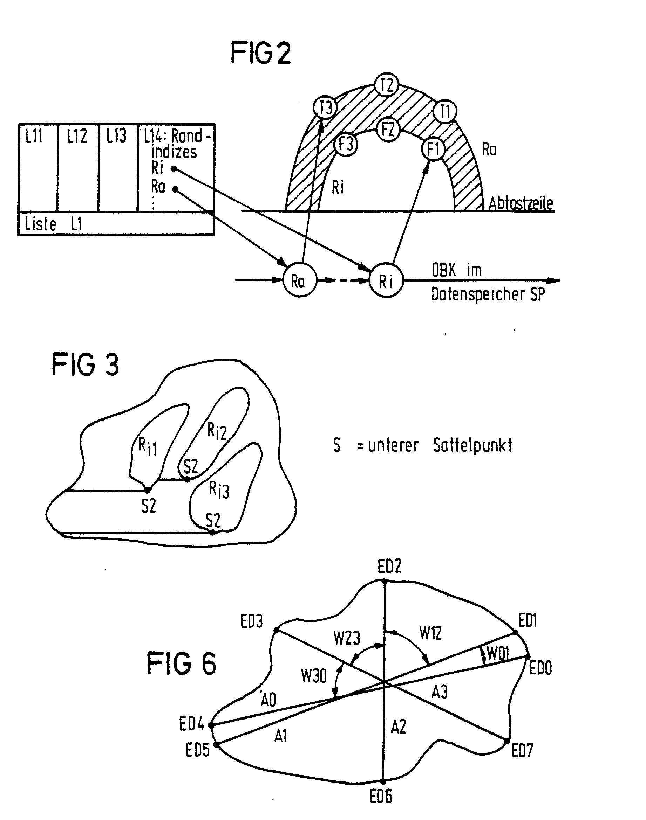

Wie bereits erläutert, zeigt Fig. 2 den Modus für einen Direktzugriff auf Randrepräsentanten in dem Datenspeicher SP. In der schematischen Darstellung bezeichnen Ra einen Außenrand, Ri einen Innenrand eines Objekts und gleichzeitig auch Randindizes, die in einer Objektbildungskette OBK in dem Datenspeicher SP angeordnet sind. Die Deskriptoren des in der Fig. schematisch dargestellten Objekts sind mit T1, T2, T3 für den Außenrand Ra und F1, F2, F3 für den Innenrand Ri gezeigt. Neben dem schematisch dargestellten Objekt ist das Schema der Liste L1 dargestellt, die in vier Unterlisten, nämlich L11, L12, L13 und L14 unterteilt ist. In der Unterliste L11 sind die X-Koordinaten der Schnittpunkte von Rändern mit der betreffenden Abtastzeile, in der Unterluste L12 Randzustände mit einer Angabe darüber, welcher Deskriptor als nächster an dem betreffenden Rand erwartet wird, in der Unterliste L13 Angaben über Kantenlängen, nämlich Abstände von einem Deskriptor zum nächsten, und in der Unterliste L14 Randindizes, nämlich Ra und Ri enthalten. Die weiteren Listen L2, L3

3

und L4 sind in entsprechender Weise unterteilt. Die Indizes der Deskriptoren, nämlich 1, 2, 3 bzw. 4 entsprechen Winkelgraden, nämlich 0 Grad, 45 Grad, 90 Grad bzw. 135 Grad von Zeigern bezogen auf die Abtastzeile.

In den Listen L1...L4 werden über die Indizes der Ränder Angaben in der Weise geführt, daß es dem zweiten Modul oder Randmodul RM möglich ist, aufgrund der Listenindizes, die jeweils mit dem Index eines neuen Deskriptors übermittelt werden, durch Direktzugriff auf den Repräsentanten des Randes zuzugreifen, mit dem der Deskriptor durch Zeiger verkettet wird. Dem dritten Modul oder Objektmodul OM ist es nach Übermitteln des Index eines geschlossenen Innenrandes des Deskriptorindex sowie der zugehörigen Listenindizes ermöglicht, den Index des Repräsentanten des umfließenden Außenrandes durch Direktzugriff zu den Listen L1.. t4 zu ermitteln und ebenfalls durch Direktzugriff auf diesen in dem Datenspeicher SP zuzugreifen.

In Fig. 3 ist, wie bereits erläutert, das Prinzip des Zuordnens von Innenrändern zu einem Außenrand dargestellt. Dafür ist vorgesehen, daß zur Zuordnung von Innenrändern, nämlich $R_{i1}$, $R_{i2}$, $R_{i3}$, zu einem Außenrand in den Listen L1...L4 auf den Eintrag zugegriffen wird, der dem abschließenden Deskriptor S2 eines Innenrandes als vorzugsweise linker Rand benachbart ist. Dieser Eintrag enthält entweder den Index des umschliessenden Außenrandes oder den Index eines diesen Außenrand verdeckenden Innenrandes. Im Falle eines verdeckenden Innenrandes wird der fertige Innenrand an eine Innenrandkette IRK des verdeckenden Innenrandes "angehängt" und bei dessen Fertigstellung zusammen mit diesem an die Innenrandkette IRK des Repräsentanten des umschliessenden Außenrandes mittels des Zeigers IRZ "angehängt".

Fig. 4 zeigt, wie bereits erläutert, den Aufbau von Objektbeschreibungen in der Objektbildungskette OBK. In dieser schematischen Darstellung bedeuten die Bezeichnungen RZ Rand-/Objektzeiger, Ra Randrepräsentanten für einen Außenrand, Ri Randrepräsentanten für einen Innenrand, DZ Deskriptorzeiger, D Deskriptoren und IRZ Innenzeiger. Zur Berechnung der einzelnen Ränder und/oder Objekte werden deren Randrepräsentanten in dem Datenspeicher SP zu einer Objektbildungskette OBK verknüpft.

Die Randrepräsentanten R werden in der Objektbildungskette OBK durch die Hilfszeiger RZ miteinander verbunden. Das fertige Objekt wird mit geschlossenem Außenrand von dem Objektmodul DM der Objektbildungskette OBK entnommen, und ihr Index wird an den fünften Modul WM weitergegeben.

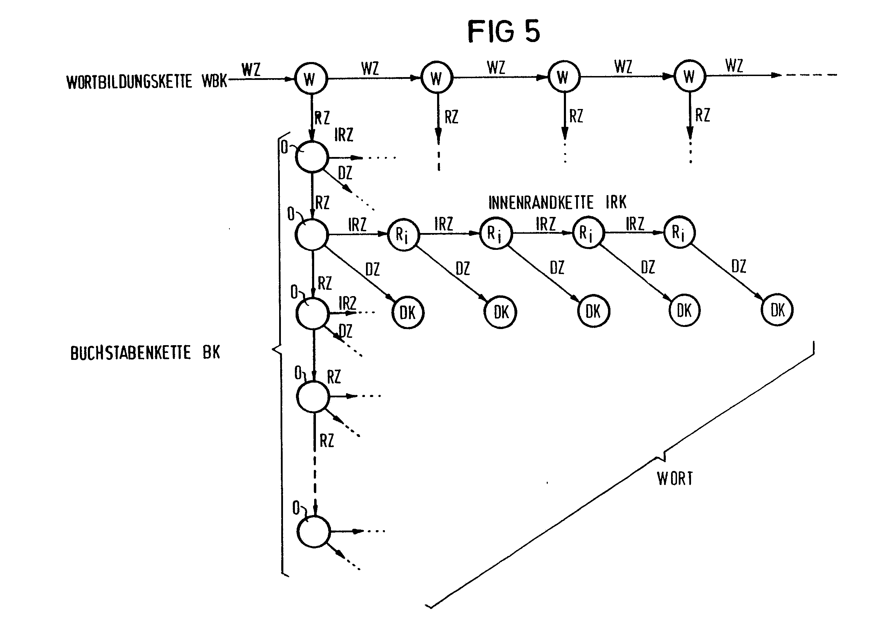

Fig. 5 zeigt, wie bereits erläutert, ein Dokumentmuster in der Wortbildungskette WBK. In dieser schematischen Darstellung zeichnen W Wortrepräsentanten, WZ Wortzeiger, DK Deskriptorketten und O Objektrepräsentanten. Die restlichen Bezeichnungen entsprechen in ihren Bedeutungen denen gemäß Fig. 4. Zum Zusammenlagern der einzelnen Objekte in einer Buchstabenkette BK der Wörter werden deren Wortrepräsentanten W in einer Wortbildungskette WBK in dem Datenspeicher SP verknüpft. Die Wortrepräsentanten W werden in der Wortbildungskette WBK durch Hilfszeiger oder Wortzeiger WZ miteinander verbunden. Die Repräsentanten der einzelnen Objekte in der Buchstabenkette BK werden vorzugsweise durch denselben Typ Hilfszeiger RZ miteinander verbunden, wie die einzelnen Randrepräsentanten R in der Objektbildungskette OBK miteinander verbunden werden.

In dem sechsten Modul MERK, vgl. Fig. 1, wird aus den Zeigern DZ und den zugehörigen Deskriptoren aller Deskriptorketten, die einem Wortrepräsentanten und dessen Objekt- und Randrepräsentanten untergeordnet sind, ein Winkelhistogramm errechnet, wobei der Winkel des Randabschnitts, der durch einen Zeiger DZ repräsentiert wird, bezogen auf die Abtastzeile auf der Abszisse des Winkelhistogramms aufgetragen ist und wobei die Summe der Länge aller Randabschnitte gleichen Winkels auf der Ordinate aufgetragen ist. Der Winkel wird aus den benachbarten Deskriptoren des Zeigers DZ errechnet. Erfindungsgemäß ist vorgesehen, daß aus den auf diese Weise entstandenen Winkelhistogrammen acht Autokorrelationskoeffizienten AKF (i) gemäß der Formel

$$AKF(i) = \sum_{w=0}^{w=359} h(w) \cdot h(w + i \cdot 45)$$

mit i = 0,1...7, h(w) = Winkelhistogramm und w = (0...359°) berechnet werden und in den den Wortrepräsentanten charakterisierenden Attributvektor V eingetragen werden, daß aus den Außenrändern der Objekte, die einem Wortrepräsentanten in der Buchstabenkette BK untergeordnet sind, Extremwertdeskriptoren $ED_0$...$ED_7$ errechnet werden, wobei unter Extremwertdeskriptoren solche Deskriptoren zu verstehen sind, die -bezogen auf einen Strahl, nämlich entweder 0°, 45°, 90° oder 135° geneigt zu der Abtastzeile -einen minimalen bzw. maximalen Projektionswert auf diesen Strahl aufweisen, daß für jeden der Strahlen aus den dem jeweiligen minimalen und dem jeweiligen maximalen Projektionswert entsprechenden Extremwertdeskriptoren eine Diagonale durch das Objekt ermittelt wird, daß die Winkel zwischen den so entstandenen Diagonalen berechnet werden, daß ein Maß ME aus den Extremwertdeskriptoren gemäß der Formel

$$ME = \frac{A0 \cdot W01 \cdot A1 + A1 \cdot W12 \cdot A2 + A2 \cdot W23 \cdot A3 + A3 \cdot W30 \cdot A0}{(A0 + A1 + A2 + A3)^2}$$

errechnet wird, welches in den Attributvektor V eingetragen wird, daß die Anzahl der Innenränder in den Attributvektor V eingetragen wird, daß die Anzahl der Objekte in den Attributvektor eingetragen wird und daß der so vervollständigte Attributvektor V als Merkmalsvektor zur Klassifikation in dem siebenten Modul K verwendet wird, vgl. auch Fig. 6.

Das in Fig. 1 gezeigte System zur Durchführung des erfindungsgemäßen Verfahrens ist vorteilhafterweise so ausgebildet, daß die Moduln DM, RM, OM, VKLAS, WM, MERK, KLAS, REF, AUS, WV und LOE jeweils als Mikroprozessoren realisiert sind, die in einer sog. Pipeline-Anordnung zusammenwirken und die auf einen gemeinsamen Speicher zugreifen, der vorzugsweise als Halbleiterspeicher ausgeführt ist. Ein alternatives Ausführungsbeispiel dazu sieht vor, daß die Moduln DM, RM, OM, VKLAS, WM, MERK, KLAS, REF, AUS, WV, LOE jeweils als spezielle Schaltungsanordnungen realisiert sind, die in einer Pipeline-Anordnung zusammenwirken und die auf einen gemeinsamen Speicher zugreifen, der vorzugsweise als Halbleiterspeicher ausgeführt ist.

Im folgenden wird zum besseren Verständnis der in der Beschreibung und in den Ansprüchen verwendeten Begriffe eine lexikonartige Zusammenstellung dieser Begriffe mit den zugehörigen Bedeutungen gegeben.

## Begriffserläuterungen

### Deskriptoren (D)
Stützstellen, aus denen Randpolygone aufgebaut sind.

### Anschlußnummer
Eindeutige Kennzeichnung eines Randsegmentes durch eine Nummer oder einen Zeiger.

### Randsegment
Randbereich zwischen zwei benachbarten Deskriptoren.

### Rand (R)
Randrepräsentant mit Deskriptorkette.

### Deskriptorkette
Verkettete Folge von Deskriptoren, die in Form eines Plygonzuges Musterränder approximieren.

### Randrepräsentant oder Randdatenelement
Datenelement in der Objektbildungskette oder Innenrandkette, das den Anfang der Deskriptorkette eines Randes markiert. Das Randdatum eines Musteraußenrandes ist zugleich Startpunkt der Innenrandkette des Objekts.

### Objekt (0)
Kette aus einem Außenrand und beliebig vielen Innenrändern (Innenrandkette). Diese Kette enthält alle Ränder, die an einem flächenmäßig zusammenhängenden Schwarzweißmuster (dem Objekt) beteiligt sind.

### Innenrandkette (IRK)
Kette der Innenränder eines Objekts.

### Objektbildungskette (OBK)
Kette von Randrepräsentanten mit noch nicht geschlossenen Polygonzügen zum Aufbau von Rändern und fertigen Objekten. Die Objektbildungskette enthält die Informationen über alle vom Abtaststrahl geschnittenen Ränder und Objekte.

### Deskriptorzeiger oder -index (DZ)
Zeiger auf die Speicherposition eines Deskriptors. Wird zur Bildung von Deskriptorketten verwendet.

### Rand/Objektzeiger oder -index (RZ bzw. BZ)
Zeiger auf die Speicherposition eines Randrepräsentanten. Wird zum Aufbau der Objektbildungskette und der Buchstabenkette verwendet.

### Zeiger Innen
Zeiger auf die Speicherposition eines Randrepräsentanten. Wird zum Aufbau der Innenrandkette eines Objekts verwendet.

### Wortzeiger oder Index (WZ)
Zeiger auf die Speicherposition eines Wortrepräsentanten. Wird zum Aufbau der Wortbildungskette verwendet.

Wort

Information über ein ganzes Wort. Die Patentstruktur hierzu besteht aus Wortrepräsentanten und Buchstabenkette.

Wortrepräsentant oder Wortdatenelement (W)

Datenelement in der Wortbildungskette. Es markiert den Startpunkt der Buchstabenkette eines Wortes. Einstiegspunkt in die gesamte Wortinformation.

Buchstabenkette (BK)

Kette aus fertigen Objekten (Buchstaben), die in ihrer richtigen Reihenfolge von links nach rechts zu einem Wort verkettet sind.

Wortbildungskette (WBK)

Kette aus Worteinträgen mit noch nicht fertiger Buchstabenkette. Sie dient dem Aufbau von Worten aus einzelnen Objekten. Die Wortbildungskette enthält alle abgetasteten Objekte und Worte eines Dokuments, die noch nicht zur statistischen Auswertung und Klassifikation freigegeben sind.

Vorklassifikation (VKLAS)

Errechnen charakteristischer Merkmale von Objekten und klassifizieren dieser Objekte als Bild- oder Grafikelement. Notwendig zur Wortblockierung.

Wortblockierung

Unterdrücken der Zusammenlagerung von Bild- oder Grafikelementen zu wortähnlichen Gebilden. Blockierte Objekte werden vor dem Eintrag in die Wortbildungskette markiert.

Objektflag

Zeigt in gesetztem Zustand an, daß in der vorher bearbeiteten Bildzeile die Deskriptorkette eines Außenrandes geschlossen wurde (fertiges Objekt). Das entsprechende Randdatum in der Objektbildungskette ist markiert.

Wortflag

Zeigt in gesetztem Zustand an, daß ein Wort aus der Wortbildungskette entnommen und der Merkmalsbildung übergeben werden kann. Der entsprechende Wortrepräsentant ist markiert.

YA

Index der momentan abgetasteten Bildzeile.

## Struktur der Datenelemente

Deskriptor:
Art
X-Koordinate
Y-Koordinate
Anschlußnummer im Zyklussinn
Anschlußnummer gegen den Zyklussinn
X-Koordinate linker Nachbarrand
Anschlußnummer linker Nachbarrand
X-Koordinate rechter Nachbarrand
Anschlußnummer rechter Nachbarrand
X-Koordinate Auftrittspunkt
Y-Koordinate Auftrittspunkt
Zeiger zum nächsten Deskriptor des Randes

Randrepräsentant:
Anschlußnummer im Zyklussinn
Anschlußnummer gegen den Zyklussinn
Zeiger zum Anfang der Deskriptorkette
Zeiger zum Ende der Deskriptorkette
Anzahl der Deskriptoren

EP 0 206 214 B1

Außen/Innenrand
linke Grenzkoordinate des Randes
rechte Grenzkoordinate des Randes
obere Grenzkoordinate des Randes
untere Grenzkoordinate des Randes
Anzahl der Innenränder
Zeiger zum Anfang der Innenrandkette
Zeiger zum Ende der Innenrandkette
Zeiger zum nächsten Rand

Wortrepräsentant:
Wortnummer
Anzahl der Buchstaben im Wort
Anzahl der Innenränder im Wort
Zeiger zum Anfang der Buchstabenkette
Zeiger zum Ende der Buchstabenkette
Zeiger zum nächsten Wort

**Merkmalsbildung**

Autokorrelationskoeffizienten:
- Erstellen eines bewerteten Winkelhistogramms aus allen am Wort beteiligten Randsegmenten
- Bilden der Autokorrelationsfunktion in 450 Schritten (8 AKF-Koeffizienten, als Merkmale geeignet)
- Vorgabe von Clusterschwerpunkten im AKF-Raum, welche bestimmte Musterklassen, z. B. Einzellinien, Rubriken, Text repräsentieren
- Messen der Abstände eines unbekannten Wortes zu den Clusterschwerpunkten

Extremwinkel:
- Ermitteln der Extremaldeskriptoren eines Wortes
- Ermitteln der Extremaldurchmesser eines Wortes
- Errechnen des Extremwertwinkels EW

Buchstabenzahl:
- Errechnen der Anzahl zusammengeketteter Einzelobjekte eines Wortes

Innenrandzahl:
- Errechnen der Anzahl aller zum Wort gehöriger Innenränder

Flächenmerkmale:
- Errechnen von Flächenprojektionen des Wortes in den 4 Richtungen 0°, 45°, 90°, 135°
- Bildung der 4 Flächenmittelwerte
- Bildung der 4 Flächenstreuungen
- Übernahme des jeweiligen Minimalwertes
- Errechnen der wahren Wortfläche vorzugsweise aus obiger 0° Projektion
- Errechnen der Hüllfläche aus den Extremaldeskriptoren
- Division (Wahre Fläche) (Hüllfläche)

**Patentansprüche**

1. Verfahren zur einheitlichen symbolischen Beschreibung von Dokumentmustern in Form von Datenstrukturen in einem Automaten, wobei sich die Dokumentmuster aus den Komponenten "Text", "Graphik" und/oder "Bild" zusammensetzen können, zum Zwecke der Zerlegung des Dokumentmusters in diese Komponenten und zur Weiterverarbeitung dieser Komponenten in auswertenden Moduln für spezielle Anwendungsfälle, wobei aus den digitalisierten Ausgangssignalen einer optischen Abtastvorrichtung zeilenweise Deskriptoren extrahiert werden, welche Stützstellen entlang Rändern in einem betreffenden Dokumentmuster darstellen,
dadurch gekennzeichnet
- daß in einem ersten Modul (DM) Deskriptoren (D) errechnet und die Daten betreffend die Deskriptoren in einem jeweils freien Speicherplatz eines Datenspeichers (SP) abgelegt werden, woraufhin von dem Datenspeicher (SP) eine Rückmeldung mit einer Information über den benutzten Speicherplatz erfolgt,

- daß ein zweiter Modul (RM) durch Übergabe der rückgesendeten Adreßinformation aktiviert wird und diese Adreßinformation zusammen mit Listenindizes aus Listen (L1...L4) übernimmt, wobei der zweite Modul (RM) diese Adreßinformation dazu benutzt, den in dem Datenspeicher (SP) abgelegten Deskriptor in eine bereits vorhandene Deskriptorkette mit einem Randrepräsentanten (R) einzubauen bzw. eine neue Deskriptorkette mit Bildung eines dafür notwendigen neuen Randrepräsentanten (R) zu beginnen, wobei es sich bei den Deskriptorketten jeweils um eine Verkettung einzelner Deskriptoren (D) mit Hilfe von Zeigern (DZ) handelt und ein neuer Deskriptor (D), der in einem beliebigen Speicherplatz in dem Datenspeicher (SP) abgelegt ist, durch Zeiger mit der betreffenden bereits bestehenden Kette oder bereits bestehenden Ketten verbunden wird, wobei mit Hilfe der übergebenen Listenindizes die Position des oder der zugehörigen Randrepräsentanten direkt den Listen (L1...L4) entnommen wird und wobei bei einer Veränderung des Repräsentanten der Deskriptorkette diese Information durch den zweiten Modul (RM) wieder in die Listen (L1...L4) rückeingetragen wird,

- daß, wenn durch eine Deskriptorkette ein vollständig geschlossener Rand gebildet worden ist, der zweite Modul (RM) einem dritten Modul (OM) den Index dieses Randes zur weiteren Verarbeitung übergibt,

- daß der zweite Modul (RM) zusammen mit der Information in dem Datenspeicher (SP) aufgrund des Randindex prüft, ob es sich bei dem Rand um einen Innenrand oder einen Außenrand handelt,

- daß im Falle eines Innenrandes die Listenindizes der Listen (L1...L4) dazu verwendet werden, aus den Listen (L1 ...L4) den Speicherindex des Repräsentanten des umschließenden Außenrandes abzurufen,

- daß mit Hilfe des Index der Repräsentant des Innenrandes durch einen Zeiger (IRZ) an eine Innenrandkette (IRK) am Repräsentanten des Außenrandes in dem Datenspeicher (SP) angehängt wird,

- daß im Falle eines Außenrandes dessen Repräsentant als Repräsentant eines Objekts genutzt wird, wobei das Objekt den Außenrand sowie alle davon umschlossenen Innenränder umfaßt und in diesem Fall der Index des Repräsentanten des fertigen Objekts an einen vierten Modul (VKLAS) weitergegeben wird,

- daß der vierte Modul (VKLAS) anhand der Gesamtanzahl der als zu einem Objekt zugehörig abgespeicherten Ränder eine Vorentscheidung darüber trifft, ob es sich bei dem Objekt mit Sicherheit um eine Bild- oder Graphikkomponente handelt oder nicht,

- daß im Falle einer Bild- oder Graphikkomponente in dem Datenspeicher (SP) der Repräsentant dieses Objekts durch eine eigene Markierung als Bild- oder Graphikkomponente gekennzeichnet wird,

- daß der Index des Repräsentanten dieses markierten oder nicht markierten Objekts an einen fünften Modul (WM) übergeben wird,

- daß in diesem fünften Modul (WM) aus dem Außenrand des Objekts Anlagerungskriterien errechnet werden,

- daß mit Hilfe dieser Anlagerungskriterien das Objekt in an sich bekannter Weise mit bereits in dem Datenspeicher (SP) gespeicherten Wortrepräsentanten verglichen wird, selbst einen neuen Wortrepräsentanten in dem Datenspeicher (SP) erzeugt oder sich mit anderen Objekten, die einem bereits vorhandenen Wortrepräsentanten in dessen Buchstabenkette (BK) untergeordnet sind, zu einem erweiterten Wort zusammenlagert und dabei in die Buchstabenkette dieser betreffenden Wortinformation eingefügt wird,

- daß Objektrepräsentanten, welche durch den fünften Modul (VKLAS) markiert wurden, jeweils einen eigenen Repräsentanten bilden, der sich nicht mit anderen Worten oder Objekten zusammenlagert,

- daß durch Vergleich mit dem Index der betreffenden Abtastzeile (YA) individuell in an sich bekannter Weise für die einzelnen Wortrepräsentanten entschieden wird, ob das Wort in dem Datenspeicher (SP) vollständig ist und daher weiterbearbeitet werden kann oder nicht,

- daß im Falle der Vollständigkeit der Index des betreffenden Wortrepräsentanten an einen sechsten Modul (MERK) weitergegeben wird,

- daß in dem sechsten Modul (MERK) aus der Gesamtanzahl der den Wortrepräsentanten untergeordneten Objekt-Randrepräsentanten und-Deskriptoren sowie deren verbindenden Zeigern (DZ) ein Attributvektor (V) kennzeichnender Attribute errechnet wird und dieser Vektor dem Wortrepräsentanten beigefügt wird,

- daß unter Weitergabe des Index des Wortrepräsentanten an einen folgenden siebenten Modul (KLAS) dieser ebenfalls nach einem an sich bekannten Klassifikationsverfahren in einem achten Modul (REF) gespeicherte Referenzmodelle mit dem Attributvektor (V) des Wortrepräsentanten vergleicht und aus dem Vergleich eine Entscheidung darüber fällt, ob der Wortrepräsentant einen Repräsentanten der Kategorie "Text", "Bild" oder "Graphik" darstellt,

- daß in einem Ausgabe-Modul (AUS), dem der Index des fertigen Wortrepräsentanten übermittelt wird, die gesamte in dem Datenspeicher (SP) gespeicherte Information über diesen Wortrepräsentanten einschließlich der Information über seine ihm untergeordneten Repräsentanten einem weitergehenden, auswertenden Verfahren in auswertenden Moduln (WV) zur Verfügung gestellt wird

und

- daß einem der auswertenden Moduln (WV) nur der Index des Wortrepräsentanten übermittelt wird und dieser Modul durch eigenen Zugriff auf den Datenspeicher (SP) die darin unter dem Index des betreffenden Wortrepräsentanten gespeicherte Information bearbeitet,

- daß in diesem Fall die Übergabe an einen darauffolgenden, abschließenden Modul (LOE) solange verzögert wird, bis der auswertende Modul (WV) die Information verarbeitet und dies an den Ausgabe-Modul (AUS) rückgemeldet hat,

- daß nach Übermittlung des Index des Wortrepräsentanten in dem abschließenden Modul (LOE) der fertig bearbeitete Repräsentant des Wortes mit allen Objekt- und Randrepräsentanteen sowie den betreffenden Deskriptoren in dem Datenspeicher (SP) gelöscht wird.

2. Verfahren nach Anspruch 1, dadurch gekennzeichnet

- daß in den Listen (L1...L4) Angaben über die Indizes der Ränder in der Weise geführt werden,

daß es dem zweiten Modul oder Randmodul (RM) möglich ist, aufgrund der Listenindizes, die jeweils mit dem Index eines neuen Deskriptors übermittelt werden, durch Direktzugriff auf den Repräsentanten des Randes zuzugreifen, mit dem der Deskriptor durch Zeiger verkettet wird, und

- daß es dem dritten Modul oder Objektmodul (OM) nach Übermitteln des Index eines geschlossenen Innenrandes, des Deskriptorindex sowie der zugehörigen Listenindizes ermöglicht ist, den Index des Repräsentanten des umschließenden Außenrandes durch Direktzugriff zu den Listen (L1...L4) zu ermitteln und ebenfalls durch Direktzugriff auf diesen in dem Datenspeicher (SP) zuzugreifen.

3. Verfahren nach Anspruch 1 oder 2, dadurch gekennzeichnet

- daß zur Zuordnung von Innenrändern zu einem Außenrand in den Listen (L1...L4) auf den Eintrag zugegriffen wird, der dem abschließenden Deskriptor (S2) eines Innenrandes als vorzugsweise linker Rand benachbart ist,

- daß dieser Eintrag entweder den Index des umschließenden Außenrandes oder den Index eines diesen Außenrand verdekkenden Innenrandes enthält und

- daß im Falle eines verdeckenden Innenrandes der fertige Innenrand an eine Innenrandkette (IRK) des verdeckenden Innenrandes angehängt wird und bei dessen Fertigstellung zusammen mit diesem an die Innenrandkette (IRK) des Repräsentanten des umschließenden Außenrandes mittels des Zeigers (IRZ) angehängt wird.

4. Verfahren nach Anspruch 1, dadurch gekennzeichnet

- daß zur Berechnung der einzelnen Ränder und/oder Objekte deren Randrepräsentanten in dem Datenspeicher (SP) zu einer Objektbildungskette (OBK) verknüpft werden und

- daß die Randrepräsentanten (R) in der Objektbildungskette (OBK) durch Hilfszeiger (RZ) miteinander verbunden werden und

- daß fertige Objekte mit geschlossenem Außenrand von dem Objektmodul (OM) der Objektbildungskette (OBK) entnommen und ihr Index an den fünften Modul (WM) weitergegeben wird.

5. Verfahren nach Anspruch 1, dadurch gekennzeichnet

- daß zum Zusammenlagern der einzelnen Objekte in der Buchstabenkette (BK) der Wörter deren Wortrepräsentanten (W) in einer Wortbildungskette (WBK) in dem Datenspeicher (SP) verknüpft werden,

- daß die Wortrepräsentanten (W) in der Wortbildungskette (WBK) durch Hilfszeiger (WZ) miteinander verbunden werden und

- daß die Repräsentanten der einzelnen Objekte in der Buchstabenkette (BK) vorzugsweise durch denselben Typ Hilfszeiger (RZ) miteinander verbunden werden, wie die einzelnen Randrepräsentanten (R) in der Objektbildungskette (OBK) miteinander verbunden werden.

6. Verfahren nach Anspruch 1, dadurch gekennzeichnet

- daß in dem sechsten Modul (MERK) aus den Zeigern (DZ) und den zugehörigen Deskriptoren aller Deskriptorketten, die einem Wortrepräsentanten und dessen Objekt- und Randrepräsentanten untergeordnet sind, ein Winkelhistogramm errechnet wird, wobei der Winkel des Randabschnitts, der durch einen Zeiger (DZ) repräsentiert wird, bezogen auf die Abtastzeile auf der Abszisse des Winkelhistogramms aufgetragen ist und wobei die Summe der Länge aller Randabschnitte gleichen Winkels auf der Ordinate aufgetragen ist und

- daß der Winkel aus den benachbarten Deskriptoren des Zeigers (DZ) errechnet wird.

7. Verfahren nach Anspruch 6, dadurch gekennzeichnet,

- daß aus den auf diese Weise entstandenen Winkelhistogrammen acht Autokorrelationskoeffizienten (AKF(i)) gemäß der Formel

$$AKF(i) = \sum_{w=0}^{w=359} h(w) \cdot h(w + i \cdot 45)$$

mit i = 0,1...7, h(w) = Winkelhistogramm und w = (0...359°) berechnet werden und in den den Wortrepräsentanten charakterisierenden Attributvektor (V) eingetragen werden,

- daß aus den Außenrändern der Objekte, die einem Wortrepräsentanten in der Buchstabenkette (BK) untergeordnet sind, Extremwertdeskriptoren ($ED_0...ED_7$) errechnet werden, wobei unter Extremwertdeskriptoren solche Deskriptoren zu verstehen sind, die - bezogen auf einen Strahl nämlich entweder 0°, 45°, 90° oder 135° geneigt zu der Abtastzeile einen minimalen bzw. maximalen Projektionswert auf diesen Strahl aufweisen,

- daß für jeden der Strahlen aus den dem jeweiligen minimalen

und dem jeweiligen maximalen Projektionswert entsprechenden Extremwertdeskriptoren eine Diagonale durch das Objekt ermittelt wird,

- daß die Winkel zwischen den so entstandenen Diagonalen berechnet werden,

- daß ein Maß (ME) aus den Extremwertdeskriptoren gemäß der Formel

$$ME = \frac{A0 \cdot W01 \cdot A1 + A1 \cdot W12 \cdot A2 + A2 \cdot W23 \cdot A3 + A3 \cdot W30 \cdot A0}{(A0 + A1 + A2 + A3)^2}$$

errechnet wird, welches in den Attributvektor (V) eingetragen wird,

- daß die Anzahl der Innenränder in den Attributvektor (V) eingetragen wird,

- daß die Anzahl der Objekte in den Attributvektor eingetragen wird und

- daß der so vervollstandigte Attributvektor (V) als Merkmalsvektor zur Klassifikation in dem siebenten Modul (KLAS) verwendet wird.

8. System zur Durchführung des Verfahrens nach den Ansprüchen 1 bis 7, dadurch gekennzeichnet, daß die Moduln (DM, RM, OM, VKLAS, WM, MERK, KLAS, REF, AUS, WV, LOE) jeweils als Mikroprozessoren realisiert sind, die in einer Pipeline-Anordnung zusammenwirken und die auf einen gemeinsamen Speichèr zugreifen, der vorzugsweise als Halbleiterspeicher ausgeführt ist.

9. System zur Durchführung des Verfahrens nach den Ansprüchen 1 bis 7, dadurch gekennzeichnet, daß die Modul (DM,RM, OM, VKLAS, WM, MERK, KLAS, REF, AUS, WV, LOE) jeweils als spezielle Schaltungsanordnung realisiert sind, die in einer Pipeline-Anordnung zusammenwirken und die auf einen gemeinsamen Speicher zugreifen, der vorzugsweise als Halbleiterspeicher ausgeführt ist.

## Claims

1. Method for a uniform symbolic description of document patterns in the form of data structures in an automated apparatus, in which method the document patterns can be composed of the components "text", "graphics" and/or "image", for the purpose of separating the document pattern into these components and for further processing these components in evaluating modules for special cases of application, in which connection descriptors which represent interpolation points along edges in a relevant document pattern are extracted line by line from the digitized output signals of an optical scanning device, characterized in that

- descriptors (D) are calculated in a first module (DM) and the data relating to the descriptors are stored in a storage location of a data store (SP) which is free in each case, whereupon the data store (SP) produces an acknowledgement containing information on the storage location used,

- that a second module (RM) is activated by transfer of the address information sent back and accepts this address information together with list indices from lists (L1...L4), in which arrangement the second module (RM) uses this address information for incorporating the descriptor stored in the data store (SP) into an already existing descriptor chain with an edge representative (R) or for beginning a new descriptor chain with formation of a new edge representative (R) needed for this, the descriptor chains being in each case a chaining of individual descriptors (D) with the aid of pointers (DZ), and a new descriptor (D), which is stored in an arbitrary storage location in the data store (SP), being linked to the relevant already existing chain or already existing chains by pointers, in which arrangement the list indices transferred are used for directly taking the position of the associated edge representative or edge representatives from the lists (L1...L4), and in which arrangement, when the representative of the descriptor chain is changed, this information is reentered in the lists (L1...L4) by means of the second module (RM),

- that, when a completely closed edge has been formed by a descriptor chain, the second module (RM) transfers the index of this edge to a third module (OM) for further processing,

- that the second module (RM), together with the information in the data store (SP), checks, on the basis of the edge index, whether the edge is an inside edge or an outside edge,

- that, in the case of an inside edge, the list indices of the lists (L1...L4) are used for calling up the storage index of the representative of the enclosing outside edge from the lists (L1...L4),
- that, using the index, the representative of the inside edge is appended by a pointer (IRZ) to an inside edge chain (IRK) at the representative of the outside edge in the data store (SP),
- that, in the case of an outside edge, its representative is used as representative of an object, the object comprising the outside edge and all inside edges enclosed by it, and in this case the index of the representative of the complete object is forwarded to a fourth module
- that the fourth module (VKLAS) makes a preliminary decision, by means of the total number of edges stored as belonging to an object, on whether the object is with certainty an image component or graphics component or not,
- that, in the case of an image component or graphics component, the representative of this object is identified in the data store (SP) by being separately marked as image component or graphics component,
- that the index of the representative of this marked or non-marked object is transferred to a fifth module (WM),
- that attachment criteria are calculated from the outside edge of the object in this fifth module (WM),
- that these attachment criteria are used for comparing the object in a manner known per se with word representatives already stored in the data store (SP), the object itself generates a new word representative in the data store (SP) or associates with other objects which are subordinate to an already existing word representative in its letter chain (BK) to form an extended word and during this process is inserted into the letter chain of this word information concerned,
- that object representatives, which were marked by the fifth module (VKLAS), in each case form a separate representative which does not associate with other words or objects,
- that, by means of comparison with the index of the relevant scanning line (YA), an individual decision is made in a manner known per se for the individual word representatives on whether the word in the data store (SP) is complete and can therefore be processed further, or not,
- that in the case of completeness, the index of the relevant word representative is forwarded to a sixth module (MERK),
- that an attribute vector (V) of characterizing attributes is calculated from the total number of object edge representatives and descriptors subordinate to the word representative and their linking pointers (DZ) in the sixth module (MERK) and this vector is added to the word representative,
- that, with forwarding the index of the word representative to a following seventh module (KLAS), the latter also compares, in accordance with a classification method known per se, reference models stored in an eighth module (REF) with the attribute vector (V) of the word representative and from the comparison makes a decision on whether the word representative is a representative of the "text", "image" or "graphics" category,
- that in an output module (AUS), which is supplied with the index of the complete word representative, the entire information on this word representative stored in the data store (SP), including the information on its subordinate representatives, is made available to a further evaluating method in evaluating modules (WV), and
- that one of the evaluating modules (WV) is only supplied with the index of the word representative and this module processes, by itself accessing the data store (SP), the information stored therein under the index of the relevant word representative,
- that in this case the transfer to a subsequent concluding module (LOE) is delayed until the evaluating module (WV) has processed the information and reported this back to the output module (AUS),
- that after the index of the word representative has been transferred in the concluding module (LOE), the completely processed representative of the word with all object and edge representatives and the relevant descriptors is erased in the data store (SP).

2. Method according to Claim 1, characterized in that
- information on the indices of the edges is carried in the lists (L1,...L4,) in such a manner that the second module or edge module (RM) is capable of directly accessing the representative of the edge to which the descriptor is chained by pointers, on the basis of the list indices which are in each case transferred together with the index of a new descriptor, and
- that the third module or object module (OM) is enabled, after transfer of the index of a closed inside edge, the descriptor index and the associated list indices, to determine the index of the representative of the enclosing outside edge by directly accessing the lists (L1...L4) and also by directly accessing these in the data store (SP).

3. Method according to Claim 1 or 2, characterized in that
- for allocating inside edges to an outside edge, the entry adjacent to the concluding descriptor (S2) of an inside edge as preferably left-hand edge is accessed in the lists (L1,...L4),
- that this entry either contains the index of the enclosing outside edge or the index of an inside edge covering this outside edge, and

11

EP 0 206 214 B1

- that, in the case of a covering inside edge, the completed inside edge is appended to an inside edge chain (IRK) of the covering inside edge and on the completion of the latter is appended, together with the latter, to the inside edge chain (IRK) of the representative of the enclosing outside edge by means of the pointer (IRZ).

4. Method according to Claim 1, characterized in that
- for calculating the individual edges and/or objects, their edge representatives in the data store (SP) are combined to form an object forming chain (OBK), and
- that the edge representatives (R) in the object forming chain (OBK) are linked to one another by auxiliary pointers (RZ), and
- that completed objects with closed outside edge are taken from the object forming chain (OBK) by the object module (OM) and their index is forwarded to the fifth module (WM).

5. Method according to Claim 1, characterized in that
- for associating the individual objects in the letter chain (BK) of the words, their word representatives (W) are combined in a word forming chain (WBK) in the data store (SP),
- that the word representatives (W) in the word forming chain (WBK) are linked to one another by auxiliary pointers (WZ), and
- that the representatives of the individual objects in the letter chain (BK) are linked to one another preferably by means of the same type of auxiliary pointer (RZ) as is used to link the individual edge representatives (R) in the object forming chain (OBK) to one another.

6. Method according to Claim 1, characterized in that
- in the sixth module (MERK) an angle histogram is calculated from the pointers (DZ) and the associated descriptors of all descriptor chains which are subordinate to a word representative and its object representatives and edge representatives, the angle of the edge section represented by a pointer (DZ) being plotted along the abscissa of the angle histogram with reference to the scanning line and the sum of the lengths of all edge sections of equal angle being plotted along the ordinate, and
- that the angle is calculated from the adjacent descriptors of the pointer (DZ).

7. Method according to Claim 6, characterized in that
- from the angle histograms produced in this manner, eight autocorrelation coefficients (AKF(i)) are calculated in accordance with the formula

$$\mathrm{AKF(i)} = \begin{array}{c} w = 359 \\ \Sigma h(w) \cdot h\,(w + i \cdot 45) \\ w = 0 \end{array}$$

where $i = 0,1...7$, $h(w) = $ angle histogram and $w = (0...359°)$
and are entered in the attribute vector (V) characterizing the word representative,
- that extreme value descriptors $(ED_0...ED_7)$ are calculated from the outside edges of the objects which are subordinate to a word representative in the letter chain (BK), in which connection extreme value descriptors are understood to be such descriptors which - referred to a ray, namely inclined by 0°, 45°, 90° or 135° with respect to the scanning line - exhibit a minimum or maximum projection value to this ray,
- that for each of the rays, a diagonal through the object is determined from the extreme value descriptors corresponding to the respective minimum and to the respective maximum projection value,
- that the angles between the diagonals thus produced are calculated,
- that a measure (ME) is calculated from the extreme value descriptors in accordance with the formula

$$\mathrm{ME} = \frac{A0 \cdot W01 \cdot A1 + A1 \cdot W12 \cdot A2 + A2 \cdot W23 \cdot A3 + A3 \cdot W30 \cdot A0}{(A0 + A1 + A2 + A3)^2}$$

which is entered in the attribute vector (V),
- that the number of inside edges is entered in the attribute vector (V),
- that the number of objects is entered in the attribute vector, and
- that the attribute vector (V) thus completed is used as characteristic vector for classification in the seventh module (KLAS).

8. System for carrying out the method according to Claims 1 to 7, characterized in that the modules (DM, RM, OM, VKLAS, WM, MERK, KLAS, REF, AUS, WV, LOE) are in each case implemented as microprocessors which co-operate in a pipeline arrangement and access a common store which is preferably constructed as semiconductor store.

9. System for carrying out the method according to Claims 1 to 7, characterized in that the modules (DM, RM, OM, VKLAS, WM, MERK, KLAS, REF, AUS, WV, LOE) are in each case implemented as special circuit arrangements which co-operate in a pipeline arrangement and which access a common store which is preferably constructed as semiconductor store.

12

EP 0 206 214 B1

## Revendications

1. Procédé pour la description symbolique uniforme, sous forme de structures de données, dans un dispositif automatique, de formes représentées sur un document et pouvant être constituées des composantes "texte", "graphique" et/ou "image", en vue de la décomposition de la forme représentée sur le document en ces composantes et en vue du post-traitement de ces composantes dans des modules d'exploitation pour des applications particulières, procédé utilisant un dispositif d'exploration optique délivrant des signaux de sortie numérisés d'où sont extraits, ligne par ligne, des descripteurs qui représentent des points d'appui le long de bords dans une forme concernée représentée sur un document, caractérisé en ce qu'il comprend:

- le calcul de descripteurs (D) dans un premier module (DM) et le stockage des données concernant les descripteurs dans un emplacement de mémoire libre d'une mémoire de données (SP), laquelle envoie ensuite un message en retour avec une information sur l'emplacement de mémoire utilisé,

- l'activation d'un deuxième module (RM) par la transmission de l'information d'adresse envoyée en retour et l'acceptation par le second module de cette information d'adresse ensemble avec des indices-listes provenant de listes (L1...L4), le deuxième module (RM) utilisant cette information d'adresse pour incorporer le descripteur stocké dans la mémoire de données (SP) dans une chaîne de descripteurs déjà existante, avec un représentant de bord (R), ou pour commencer une nouvelle chaîne de descripteurs avec formation d'un nouveau représentant de bord (R) nécessaire à cet effet, les chaînes de descripteurs étant constituées chacune d'un enchaînement de descripteurs individuels (D) réalisé à l'aide d'indicateurs (DZ), un nouveau descripteur (D), stocké à un emplacement de mémoire quelconque dans la mémoire de données (SP), étant relié par des indicateurs à la chaîne déjà existante concernée ou à des chaînes déjà existantes, avec prélèvement direct des listes (L1...L4), à l'aide des indices-listes transmis, de la position du ou des représentants de bord associés et avec réintroduction dans les listes (L1...L4) de cette information par le deuxième module (RM) en cas de changement du représentant de la chaîne de descripteurs,

- le transfert par le deuxième module (RM) de l'indice de ce bord à un troisième module (OM), en vue du post-traitement, lorsqu'une chaîne de descripteurs a formé un bord complètement fermé,

- le contrôle par le deuxième module (RM), à l'aide de l'information relative à l'indice de bord contenue dans la mémoire de données (SP), pour savoir s'il s'agit d'un bord intérieur ou d'un bord extérieur,

- l'utilisation des indices-listes des listes (L1...L4), s'il s'agit d'un bord intérieur, pour appeler l'indice-mémoire du représentant du bord extérieur qui l'entoure à partir des listes (L1...L4),

- l'accrochage du représentant du bord intérieur, par un indicateur (IRZ) sur une chaîne de bords intérieurs (IRK) et à l'aide de l'indice, au représentant du bord extérieur, dans la mémoire de données (SP),

- l'utilisation, s'il s'agit d'un bord extérieur, du représentant de ce bord extérieur comme représentant d'un objet qui comprend ledit bord et dont les bords intérieurs qu'il représentant de l'objet fini à un quatrième module (VKLAS),

- la prise d'une décision préliminaire, par le quatrième module (VKLAS), d'après le nombre total des bords mémorisés comme appartenant à un objet, sur la question de savoir si l'objet est avec certitude une composante d'image ou graphique ou non,

- la caractérisation, dans la mémoire de données (SP), s'il s'agit d'une composante d'image ou graphique, du représentant de cet objet en tant que composante d'image ou graphique par un marquage particulier,

- la transmission de l'indice du représentant de cet objet marqué ou non marqué à un cinquième module,

- le calcul de critères d'agglomération, dans ce cinquième module (WM), à partir du bord extérieur de l'objet,

- la comparaison de l'objet avec des représentants de mot déjà mémorisés dans la mémoire de données (SP), de manière connue, à l'aide de ces critères d'agglomération, la création par l'objet lui-même d'un nouveau représentant de mot dans la mémoire de données (SP) ou l'agglomération ou son agglomération avec d'autres objets qui sont subordonnés dans un représentant de mot déjà existant, dans la chaîne de caractères (BK) de celui-ci, pour former un mot complété, avec insertion dans la chaîne de caractères de l'information-mot qui le concerne,

- la création, par des représentants d'objet marqués par le cinquième module (VKLAS), d'un représentant qui leur est propre et ne s'agglomère pas avec d'autres mots ou objets,

- la prise d'une décision, pour les différents représentants de mot, d'une manière en elle-même connue, par comparaison avec l'indice de la ligne balayée (YA) concernée, sur la question de savoir si le mot dans la mémoire de données (SP) est complet et peut donc être soumis à la suite du traitement ou non,

- la transmission de l'indice du représentant de mot concernée à un sixième module (MERK) au cas où le mot est complet,

- le calcul, dans le sixième module (MERK), à partir de l'ensemble des représentants de bords

13

d'objet et des descripteurs subordonnés aux représentants de mot, ainsi que des indicateurs (DZ) qui les relient, d'un vecteur-attribut (V) d'attributs caractérisants et l'addition de ce vecteur au représentant de mot,

- la transmission de l'indice du représentant de mot à un module suivant, constituant le septième module (KLAS), la comparaison par celui-ci, également selon un procédé de classification en lui-même connu, du vecteur-attribut (V) du représentant de mot avec des modèles de référence mémorisés dans un huitième module (REF) et la prise d'une décision, par le septième module, d'après le résultat de la comparaison, sur la question de savoir si le représentant de mot est un représentant de la catégorie "texte", de la catégorie "image" ou de la catégorie "graphique",

- la transmission de l'indice du représentant de mot fini à un module de sortie (AUS) et la mise à disposition par celui-ci de toute l'information stockée dans la mémoire de données (SP) concernant ce représentant de mot, y compris l'information sur les représentants qui lui sont subordonnés, pour un procédé consécutif d'exploitation dans des modules d'exploitation (WV) et

- la transmission à l'un des modules d'exploitation (WZ) du seul indice du représentant de mot et le traitement par ce module, par l'accès autonome de celui-ci à la mémoire de données (SP), de l'information stockée dans cette mémoire sous l'indice du représentant de mot concerné,

- la transmission retardée, dans ce cas, à un module terminal suivant (LOE), jusqu'à ce que le module d'exploitation ait traité l'information et en ait informé en retour le module de sortie (AUS) et

- après transmission de l'indice du représentant de mot dans le module terminal (LOE), l'effacement du représentant - dont le traitement est fini - du mot et de tous les représentants d'objets et de bords, ainsi que des descripteurs concernés, dans la mémoire de données (SP).

2. Procédé selon la revendication 1, caractérisé en ce que

- les listes (L1...L4) sont pourvues d'indications sur les indices des bords qui permettent au deuxième module ou module de bords (RM), sur la base des indices-listes, transmis chaque fois avec l'indice d'un nouveau descripteur, d'accéder directement au représentant du bord avec lequel le descripteur est enchaîné par des indicateurs et le troisième module ou module d'objet (OM) est en mesure, après transmission de l'indice d'un bord intérieur fermé, de l'indice-descripteur et des indices-listes correspondants, de déterminer l'indice du représentant du bord extérieur qui entoure le bord intérieur par accès direct aux listes (L1...L4) et d'accéder également directement à celui-ci dans la mémoire de données (SP).

3. Procédé selon la revendication 1 ou 2, caractérisé en ce que

- pour la coordination de bords intérieurs à un bord extérieur, il est fait usage d'un accès, dans les listes (L1...L4), à l'introduction qui est voisine, de préférence en tant que bord gauche, du descripteur terminal (S2) d'un bord intérieur,

- cette introduction contient, soit l'indice du bord extérieur entourant ce bord intérieur, soit l'indice d'un bord intérieur masquant ce bord extérieur et

- s'il s'agit d'un bord intérieur masquant, le bord intérieur fini est accroché à une chaîne de bords intérieurs (IRK) du bord intérieur masquant et lors de la finition de celui-ci, est accroché ensemble avec lui, au moyen de l'indicateur (IRZ), à la chaîne de bords intérieurs (IRK) du représentant du bord extérieur entourant.

4. Procédé selon la revendication 1, caractérisé en ce que

- pour le calcul des différents bords et/ou objets, leurs représentants de bord sont enchaînés dans la mémoire de données (SP) en une chaîne de formation d'objets (OBK),

- les représentants de bord (R) sont reliés entre eux par des indicateurs auxiliaires (RZ) dans la chaîne de formation d'objets (OBK) et

- l'objet fini, présentant un bord extérieur fermé, est retiré par le module d'objets (OM) de la chaîne de formation d'objets (OBK) et son indice est transmis au cinquième module (WM).

5. Procédé selon la revendication 1, caractérisé en ce que

- pour l'agglomération des différents objets dans la chaîne de caractères (BK) des mots, leurs représentants de mot (W) sont enchaînés, dans la mémoire de données (SP), en une chaîne de formation de mots (WBK),

- les représentants de mot (W) sont reliés entre eux par des indicateurs auxiliaires (WZ) dans la chaîne de formation de mots (WBK) et

- les représentants des différents objets dans la chaîne de caractères (BK) sont de préférence reliés entre eux par le même type d'indicateurs auxiliaires (RZ) que ceux reliant entre eux les différents représentants de bord (R) dans la chaîne de formation d'objets (OBK).

6. Procédé selon la revendication 1, caractérisé en ce que

- un histogramme d'angle est calculé dans le sixième module (MERK) à partir des indicateurs (DZ) et des descripteurs associés de toutes les chaînes de descripteurs qui sont subordonnées à un représentant de mot et à ses représentants d'objet et de bord, histogramme dans lequel l'angle du segment de bord représenté par un indicateur (DZ), par rapport à la ligne balayée, est indiqué en abscisses, et dans lequel la somme des longueurs de tous les segments de bord de même angle est indiquée en ordonnées et

- l'angle est calculé à partir des descripteurs voisins de l'indicateur (DZ).

7. Procédé selon la revendication 6, caractérisé en ce que

- huit coefficients d'autocorrélation (AKF (i)) sont calculés, à partir des histogrammes d'angle ainsi formés, selon la formule

$$AKF(i) = \sum_{w=0}^{w=359} h(w) \cdot h(w + i \cdot 45)$$

où $i = 0,1...7$, $h(w) = $ histogramme d'angle et $w = (0...359°)$
et sont introduits dans le vecteur-attribut (V) caractérisant le représentant de mot,
- des descripteurs de valeur extrême ($ED_0...ED_7$) sont calculés à partir des bords extérieurs des objets subordonnés à un représentant de mot dans la chaîne de caractères (BK), le terme descripteurs de valeur extrême désignant des descripteurs qui, par rapport à un rayon ayant une inclinaison de 0°, 45°, 90° ou 135° par rapport à la ligne balayée, présentent une valeur de projection minimale ou maximale sur ce rayon,
- une diagonale à travers l'objet est déterminée pour chacun des rayons à partir des descripteurs de valeur extrême correspondant respectivement à la valeur de projection minimale et à la valeur de projection maximale,
- les angles entre les diagonales ainsi formées sont calculés,
- une dimension (ME) est calculée à partir des descripteurs de valeur extrême selon la formule

$$ME = \frac{A0 \cdot W01 \cdot A1 + A1 \cdot W12 \cdot A2 + A2 \cdot W23 \cdot A3 + A3 \cdot W30 \cdot A0}{(A0 + A1 + A2 + A3)^2}$$

dimension qui est introduite dans le vecteur-attribut (V),
- le nombre des bords intérieurs est introduit dans le vecteur-attribut (V),
- le nombre des objets est introduit dans le vecteur-attribut et
- le vecteur-attribut (V), ainsi complété, est utilisé en tant que vecteur-singularité pour la classification dans le septième module (KLAS).

8. Système pour la mise en oeuvre du procédé selon les revendications 1 à 7, caractérisé en ce que les modules (DM, RM, OM, VKLAS, WM, MERK, KLAS, REF, AUS, WV, LOE) sont constitués par des microprocesseurs qui coopèrent dans une disposition pipeline et qui peuvent accéder à une mémoire commune réalisée de préférence comme une mémoire à semi-conducteurs.

9. Système pour la mise en oeuvre du procédé selon les revendications 1 à 7, caractérisé en ce que les modules (DM, RM, OM, VKLAS, WM, MERK, KLAS, REF, AUS, WV, LOE) sont réalisés sous forme de circuits particuliers qui coopèrent dans une disposition pipeline et qui peuvent accéder à une mémoire commune réalisée de préférence comme une mémoire à semi-conducteurs.

**FIG 1**

Kamera — K — A/D — BS Bildspeicher

U — Umwandeln Bild - Liste

Listen zur
Bildzeile YA
Bildzeile YA-1

L1   L2
L3   L4

YA → DM Deskriptoren

RM Ränder

OM Objekte

VKLAS Vorklassifikation

WM Worte

MERK Graphattribute

REF Referenz-modelle → KLAS Klassifikation

SP Datenspeicher

AUS Ausgabe

Wortindex

Wort - Index der klassifizierten Dokumentkomponente

LOE Löschen

Rückmeldesignal

WV Auswerten-der Modul

## FIG 2

| L11 | L12 | L13 | L14: Rand-indizes Ri Ra ⋮ |
|---|---|---|---|
| Liste L1 | | | |

## FIG 3

S = unterer Sattelpunkt

## FIG 6

**FIG 4**

OBJEKT-BILDUNGSKETTE OBK

RZ · RZ · RZ · RZ · RZ · RZ

DZ · DZ · DZ · DZ

IRZ

INNENRANDKETTE

INNENRAND

INNENRAND

DESKRIPTORKETTE / OBJEKT

INNENRANDKETTE IRK

AUSSENRAND

VERDECKTER INNENRAND

EP 0 206 214 B1

# FIG 5

WORTBILDUNGSKETTE WBK

WZ    WZ    WZ    WZ    WZ    WZ

RZ    RZ    RZ    RZ

IRZ

DZ

INNENRANDKETTE IRK

RZ    IRZ    IRZ    IRZ    IRZ    IRZ

DZ    DZ    DZ    DZ    DZ

RZ    IRZ

DZ

DK    DK    DK    DK    DK

BUCHSTABENKETTE BK

RZ

RZ

WORT

RZ

EP 0 206 214 B1